# EUROPEAN PATENT APPLICATION

(11) **EP 4 800 228 A2**
(43) Date of publication of application: **02.09.2026**
(21) Application number: 26193173.7
(22) Date of filing: 10.06.2024
(51) Int. Cl.: F02C 3/30

(54) **WATER ACTIVE TURBINE CLEARANCE CONTROL**

(30) Priority: 08.06.2023 US 202318331503
(62) Document number(s) of the earlier application(s) in accordance with Art. 76 EPC: 24181106.6 / 4 477 845
(71) Applicant: RTX Corporation, Farmington, CT 06032 (US)
(72) Inventor: SOBANSKI, Jon Erik, Glastonbury, 06033 (US)
(74) Representative: Dehns

(57) **Abstract**

A turbine engine assembly includes an active clearance control system (58) that is configured to utilize water (50) that is extracted from an exhaust gas flow (40) to control a clearance between a tip of a rotating blade and a case structure (72) by controlling thermal growth of the case structure (72). Water extracted by a condenser (44) is also provided to an evaporator system (42) where thermal energy from the exhaust gas flow (40) is utilized to transform water into a steam flow (48). A portion of water (94) utilized in the active clearance control system is communicated to the evaporator system (42).

## Description

### TECHNICAL FIELD

The present disclosure relates generally to an aircraft propulsion system that includes a condenser for extracting water from an exhaust gas flow. More particularly, this disclosure relates to an active turbine clearance control that uses water extracted from the exhaust gas flow.

### BACKGROUND

Reduction and/or elimination of carbon emissions generated by aircraft operation is a stated goal of aircraft manufacturers and airline operators. Turbine engines compress incoming core airflow, mix the compressed airflow with fuel that is ignited in a combustor to generate an exhaust gas flow. Steam injection can provide improved propulsive efficiencies. Water recovered from the exhaust gas flow may be transformed into steam using thermal energy from the exhaust gas flow. Water recovery and steam generation present opportunities for integration into various engine systems and provide a means of thermal energy recovery not present in conventional turbine engine architectures.

### SUMMARY

A turbine engine assembly according to an aspect of the present invention includes, among other possible things, a compressor section where an inlet airflow is compressed, a combustor section where the compressed inlet airflow is mixed with fuel and ignited to generate an exhaust gas flow that is communicated through a core flow path, a turbine section where expansion of the exhaust gas flow is utilized to generate a mechanical power output, a condenser where water is extracted from the exhaust gas flow, an active clearance control system that is configured to utilize water that is extracted from the exhaust gas flow to control a clearance between a tip of a rotating blade and a case structure by controlling thermal growth of the case structure, and an evaporator system where thermal energy from the exhaust gas flow is utilized to transform water that is extracted from the exhaust gas flow into a steam flow, a portion of water utilized in the active clearance control system is communicated to the evaporator system.

Optionally, and in accordance with the above, the active clearance control system includes a cooling passage where a cooling water flow is in thermal communication with the case structure. The cooling passage includes an inlet and an outlet.

Optionally, and in accordance with any of the above, the case structure includes an inner wall that is spaced radially apart from an outer wall and the cooling passage is at least partially defined within a radial space between the inner wall and the outer wall.

Optionally, and in accordance with any of the above, the passage includes at least one conduit that is in thermal contact with the case structure.

Optionally, and in accordance with any of the above, the at least one conduit are disposed about an outer periphery of the case structure.

Optionally, and in accordance with any of the above, the turbine engine assembly further includes a control valve that is configured to proportionally control a flow rate of the cooling water flow to the inlet.

Optionally, and in accordance with any of the above, the turbine engine assembly further includes a controller that is programmed to operate the control valve to adjust the flow rate of the cooling water flow based on at least one of a measured engine temperature or a current engine operating condition.

Optionally, and in accordance with any of the above, the compressor includes a plurality of rotatable compressor blades and the case structure includes a compressor case.

Optionally, and in accordance with any of the above, the turbine section includes a plurality of rotatable turbine blades and the case structure includes a turbine case.

Optionally, and in accordance with any of the above, the case structure includes a rib member that is disposed on a radially outer surface that corresponds to a position of a rotating blade and the cooling passage is configured to place a cooling water flow in the thermal communication with the rib member.

Optionally, and in accordance with any of the above, the turbine engine assembly further includes a fuel system that is configured to provide a non-carbon-based fuel to the combustor section.

Optionally, and in accordance with any of the above, the turbine engine assembly further includes an intercooling system where a flow of water is utilized for cooling a portion of the compressed inlet flow.

An aircraft propulsion system according to another aspect of the present invention includes, among other possible things, a core engine that is configured to generate an exhaust gas flow, the core engine includes a compressor section, combustor section and a turbine section, the turbine section includes a turbine case structure and a rotatable turbine blade, a condenser where water is extracted from the exhaust gas flow, an active clearance control system that is configured to utilize water that is extracted from the exhaust gas flow to control a clearance between a tip of the rotatable turbine blade and the turbine case structure by controlling thermal growth of the turbine case structure, the active clearance control system includes a cooling passage where a cooling water flow is placed in thermal communication with the turbine case structure, and an evaporator system where thermal energy from the exhaust gas flow is utilized to transform water that is extracted from the exhaust gas flow into a steam flow, a portion of water utilized in the active clearance control system is communicated to the evaporator system.

Optionally, and in accordance with any of the above, the turbine case structure includes an inner wall that is spaced radially apart from an outer wall and the cooling passage is at least partially defined within a radial space between the inner wall and the outer wall.

Optionally, and in accordance with any of the above, the passage includes at least one conduit that is disposed about an outer periphery of the turbine case structure.

Optionally, and in accordance with any of the above, the aircraft propulsion system further includes a control valve that is configured to proportionally control a flow rate of the cooling water flow through the cooling passage.

Optionally, and in accordance with any of the above, the aircraft propulsion system further includes a controller that is programmed to operate the control valve to adjust the flow rate of the cooling water flow based on at least one of a measured engine temperature or a current engine operating condition.

A method of operating a gas turbine engine, the method, according to another aspect of the present invention includes, among other possible things, generating an exhaust gas flow that is communicated through a core flow path, expanding the gas flow through a turbine section to generate a mechanical power output, extracting water from the exhaust gas flow in a condenser, controlling a clearance between a rotating blade and a fixed case structure by controlling thermal growth of the fixed case structure by selectively providing a water flow that is in thermal communication with an outer surface of the fixed case structure, communicating the water flow from the fixed case structure to an evaporator system, and transforming the water flow to a steam flow with heat from the exhaust gas flow in the evaporator system.

Optionally, and in accordance with any of the above, the method further includes monitoring a temperature of the fixed case structure and controlling the water flow that is in thermal communication with the fixed case structure to maintain a predefined clearance between the rotating blade and an inner surface of the fixed case structure.

Optionally, and in accordance with any of the above, the method includes proportionally controlling the water flow with a control valve based on at least one of sensed temperature of the fixed case structure and a current engine operating parameter.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

The following numbered clauses define aspects and embodiments of the invention that are disclosed, but not presently claimed:
1. A turbine engine assembly comprising:
   a compressor section configured to compress an inlet airflow;
   a combustor section in which the compressed inlet airflow is mixed with fuel and ignited to generate an exhaust gas flow that is communicated through a core flow path;
   a turbine section configured to utilize expansion of the exhaust gas flow to generate a mechanical power output;
   a condenser configured to extract water from the exhaust gas flow;
   an active clearance control system configured to utilize water extracted from the exhaust gas flow to control a clearance between a tip of a rotating blade and a case structure by controlling thermal growth of the case structure; and
   an evaporator system configured to utilize thermal energy from the exhaust gas flow to transform water extracted from the exhaust gas flow into a steam flow, wherein a portion of water utilized in the active clearance control system is communicated to the evaporator system.
2. The turbine engine assembly as recited in clause 1, wherein the active clearance control system includes a cooling passage through which a cooling water flow flows, the cooling passage is configured to provide thermal contact between the case structure and the cooling water flow and includes an inlet and an outlet.
3. The turbine engine assembly as recited in clause 2, wherein the case structure includes an inner wall spaced radially apart from an outer wall and the cooling passage is at least partially defined within a radial space between the inner wall and the outer wall.
4. The turbine engine assembly as recited in clause 2, wherein the cooling passage comprises one or more conduits in thermal contact with the case structure.
5. The turbine engine assembly as recited in clause 4, wherein the one or more conduits are disposed about an outer periphery of the case structure.
6. The turbine engine assembly as recited in any of clauses 2 to 5, further including a control valve configured to proportionally control a flow rate of the cooling water flow to the inlet.
7. The turbine engine assembly as recited in clause 6, further including a controller programmed to operate the control valve to adjust the flow rate of the cooling water flow based on a measured engine temperature and/or a current engine operating condition.
8. The turbine engine assembly as recited in any of clauses 2 to 7, wherein the case structure includes a rib member disposed on a radially outer surface of the case structure at an axial location corresponding to a position of the rotatable blade and the cooling passage is configured to place the cooling water flow in the thermal contact with the rib member.
9. The turbine engine assembly as recited in any preceding clause, wherein the compressor section includes a plurality of rotatable compressor blades and the case structure comprises a compressor case.
10. The turbine engine assembly as recited in any of clauses 1 to 8, wherein the turbine section includes a plurality of rotatable turbine blades and the case structure comprises a turbine case.
11. The turbine engine assembly as recited in any preceding clause, further including a fuel system configured to provide a non-carbon-based fuel to the combustor section.
12. The turbine engine assembly as recited in any preceding clause, further including an intercooling system configured to utilize a flow of water for cooling a portion of the compressed inlet flow.
13. A method of operating a gas turbine engine, the method comprising:
   generating an exhaust gas flow that is communicated through a core flow path;
   expanding the gas flow through a turbine section to generate a mechanical power output;
   extracting water from the exhaust gas flow in a condenser;
   controlling a clearance between a tip of a rotating blade and a fixed case structure by controlling thermal growth of the fixed case structure by selectively providing a water flow in thermal contact with the fixed case structure;
   communicating the water flow from the fixed case structure to an evaporator system; and
   transforming the water flow to a steam flow using heat from the exhaust gas flow in the evaporator system.
14. The method as recited in clause 13, further including monitoring a temperature of the fixed case structure and controlling the water flow in thermal contact with the fixed case structure to maintain a predefined clearance between the tip of the rotating blade and an inner surface of the fixed case structure.
15. The method as recited in clause 14, proportionally controlling the water flow with a control valve based on a sensed temperature of the fixed case structure and/or a current engine operating parameter.

### BRIEF DESCRIPTION OF THE DRAWINGS

Figure 1 is a schematic view of an example aircraft propulsion system embodiment.
Figure 2 is a schematic cross-sectional view of an example active clearance control system.
Figure 3 is a side schematic view of the example active clearance control system shown in Figure 2.
Figure 4 is a schematic cross-sectional view of another example active clearance control system.
Figure 5 is a side schematic view of the example active clearance control system shown in Figure 4.
Figure 6 is a schematic view of another example aircraft propulsion system embodiment.
Figure 7 is a schematic cross-sectional view of another example active clearance control system.

### DETAILED DESCRIPTION

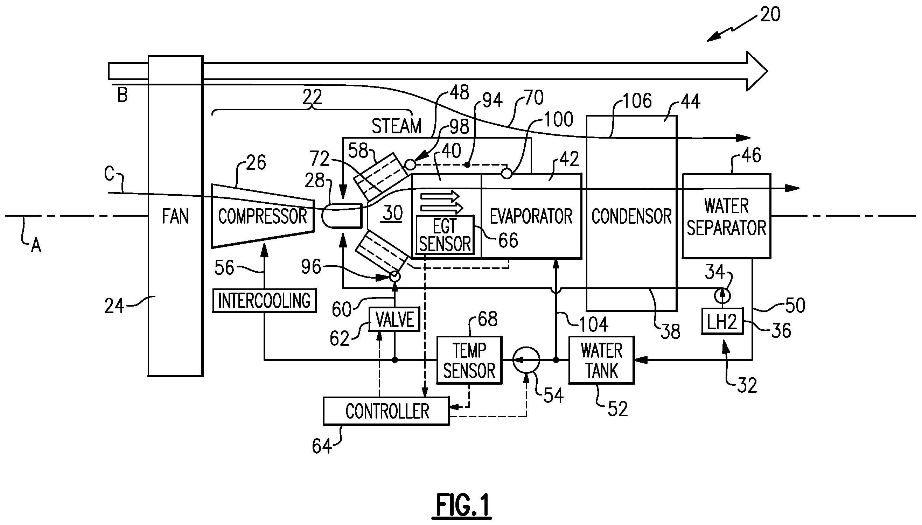

Figure 1 schematically illustrates an example propulsion system 20 that includes an active clearance control (ACC) system 58 that utilizes a flow of water 60 for cooling and controlling thermal growth of a case structure 72. The flow of water 60 controls thermal expansion to control a clearance between rotating blades and an inner surface of the case structure 72. Heat absorbed by the flow of water 60 is recovered by aiding steam generation within an evaporator 42.

The example propulsion system 20 includes a fan section 24 and a core engine section 22. The core engine section 22 includes a compressor section 26, a combustor section 28 and the turbine section 30 disposed along an engine longitudinal axis A. The fan section 24 drives inlet airflow along a bypass flow path B, while the compressor section 26 draws air in along a core flow path C. The inlet airflow is compressed and communicated to the combustor section 28 where the compressed core airflow is mixed with a fuel flow 38 and ignited to generate exhaust gas flow 40. The exhaust gas flow 40 expands through the turbine section 30 where energy is extracted to generate a mechanical power output utilized to drive the fan section 24 and the compressor section 26.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

A fuel system 32 including at least a fuel tank 36 and a fuel pump 34 provide the fuel flow 38 to the combustor 28. The example fuel system 32 is configured to provide a hydrogen-based fuel such as a liquid hydrogen (LH₂). Although hydrogen is disclosed by way of example, other non-carbon-based fuels could be utilized and are within the contemplation of this disclosure. Moreover, the disclosed features may also be beneficial in an engine configured to operate with traditional carbon fuels and/or biofuels, such as sustainable aviation fuel.

An evaporator system 42 and condenser 44 are disposed downstream of the turbine section 30 and receive the exhaust gas flow 40. The evaporator system 42 utilizes thermal energy from the exhaust gas flow 40 to generate a steam flow 48 from a water flow 50 extracted by the condenser 44 and separated in a water separator 46.

The condenser 44 cools the exhaust gas flow 40 to extract water that is separated from the gas in the water separator 46 and gathered in a tank 52. A pump 54 pressurizes water for communication from the water tank 52. In one disclosed example embodiment, a portion of the fuel flow 38 is utilized as a heat sink to cool the exhaust gas flow 40 in the condenser 44. In another example embodiment, a cooling ram air flow 70 is used as the cold sink. Other cold sink flows may be utilized to cool the exhaust gas flow 40 within the condenser 44 and are within the contemplation and scope of this disclosure.

Water 50 recovered with the condenser 44 may also be provided as an intercooling water flow 56 to the compressor section 26. The water flow 56 is injected into a location within the compressor section 26 to cool the core flow and thereby increase mass flow. The increased mass flow improves compressor operating efficiencies. The example intercooling water flow 56 is shown schematically and may be injected at any location within the compressor section 26 or upstream of the combustor 28.

The steam flow 48 from the evaporator 42 is injected into the core flow path at or upstream of the combustor 28 and increases mass flow through the turbine section 30 and thereby increase engine power and efficiency. The propulsion system 20 has an increased power output from the injected steam 48 due to an increasing mass flow through the turbine section 30 without a corresponding increase in work from the compressor section 26. Although the steam flow 48 is shown as being injected into the combustor 28, the steam flow 48 may be injected at other locations along the core flow path C and remain within the contemplation and scope of this disclosure.

The active clearance control (ACC) system 58 receives a flow of water 60 that cools the case structure 72 to control thermal growth and thereby a clearance between a blade tip and an inner surface of the case structure 72. A control valve 62 governs a rate of flow of water to the ACC system 58 based on information indicative of engine operation. In one example embodiment, a controller 64 receives information relating to temperatures of the exhaust gas flow 40 from a first temperature sensor 66. A second temperature sensor 68 provides information indicative of a temperature of the flow of water 60. The controller 64 utilizes the temperature information and controls the valve 62 to direct the flow of water 60.

The flow of water 60 accepts heat from the case structure 72 that is utilized to aid in the generation of the steam flow 48. Heated water flow 94 exhausted through an outlet 98 is communicated to an inlet 100 of the evaporator system 42. The preheated water flow 94 is mixed with a non-heated water flow 104 in the evaporator system 42 and heated by the exhaust gas flow 40 to generate the steam flow 48. The heated water flow 94 reduces the amount of heat required to transform the liquid water into the steam flow 48. The heat absorbed by the water from the case structure 72 is thereby recovered rather than simply exhausted to the ambient environment.

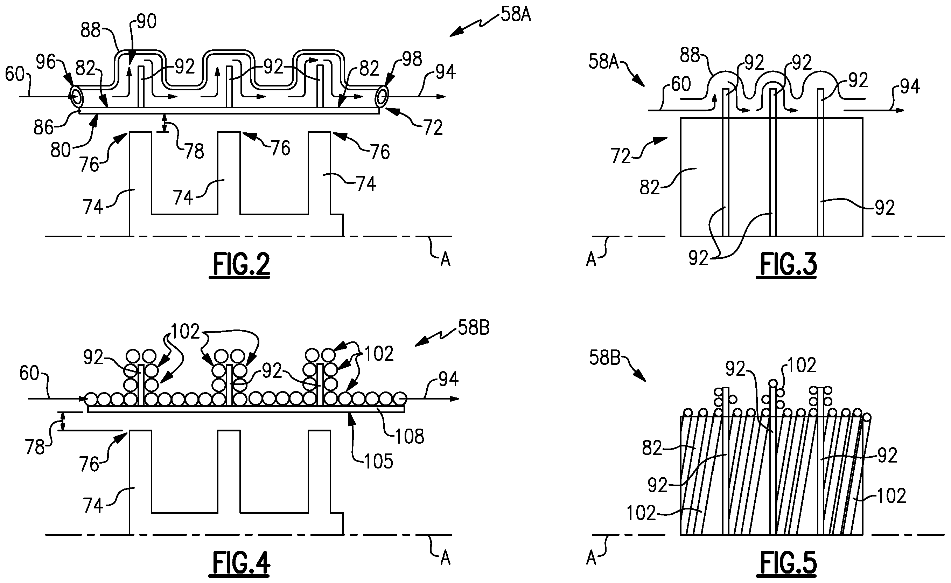

Referring to Figures 2 and 3, with continued reference to Figure 1, an example ACC system 58A is schematically shown and includes a cooling passage 90 defined between an inner wall 86 and outer wall 88. The inner wall 86 includes an inner surface 80. In this disclosed example embodiment, the case structure 72 is a turbine case that surrounds rotatable turbine blades 74 with tips 76. A clearance gap 78 between the tips 76 and the inner surface 80 is controlled by limiting thermal expansion of the case structure 72. The example case structure 72 is shown schematically by way of example and may include additional components that are controlled to maintain the desired clearance.

The cooling passage 90 is defined within the radial space between the inner wall 86 and the outer wall 88 and is disposed about rib members 92. The rib members 92 extend outward from an outer surface 82 of the inner wall 86 and are arranged axially at a location that corresponds with one of the turbine blades 74. The rib members 92 provide additional localized surface area to concentrate cooling in locations that correspond with the location of the blades 74. The example rib members 92 extend circumferentially about the case structure 72.

The example cooling passage 90 includes an inlet for the cooling water flow 60 and an outlet 98 for a heated water flow 94. The heated water flow 94 is communicated to the inlet 100 of the evaporator system 100. In this example embodiment, the inlet 96 is upstream of the outlet 94 relative to the direction of the exhaust gas flow 40. Accordingly, the cooling water flow 60 and the exhaust gas flow 40 flow in a common direction. It is within the contemplation of this disclosure that the cooling water flow could be arranged to flow counter to the exhaust gas flow 40. Moreover, although a single inlet 96 and outlet 98 are shown by way of example, multiple inlets and outlets may be utilized and are within the contemplation of this disclosure.

Referring to Figures 4 and 5, with continued reference to Figure 1, another example ACC system 58B is disclosed includes a plurality of conduits 102 disposed about the case structure 72. The conduits 102 define cooling passages for the cooling water flow 60. The conduits 102 are wound about the wall 108 that defines the case structure 72. The conduits 102 may be spirally, radially or axially arranged to provide thermal communication between the case structure 72 and the cooling water flow 60. The conduits 102 may be arranged about each of the rib members 92 to enhance thermal control over the case structure 72.

Although example embodiments of the cooling flow passages are shown and described, other passage arrangements that provide thermal communication between the cooling water flow 60 and the case structure 72 could and are within the contemplation and scope of this disclosure.

The control valve 62 is provided to control cooling water flow 60 into the cooling passage 90. The controller 64 is provided and programmed to operate the control valve 62 based on the temperature information provided by the temperature sensors 66, 68. The control valve 62 may provide proportional control of water flow to proportion the cooling water flow 60 to maintain and control the thermal growth of the case structure 72. The control valve 62 is shown schematically and can be one valve or a system of valves that provide control of the cooling water flow 60.

The controller 64 is disclosed by way of example as programmed to operate the control valve 62 based on information from the temperature sensors 66 and 68 along with other engine operating information. The operating information can include monitored engine parameters such as shaft speeds, pressures, temperatures within the propulsion system 20 and information indicative of ambient conditions.

The example controller 64 is a device and system for performing necessary computing or calculation operations. The example controller 64 may be part of the full authority digital engine control (FADEC) and/or be specially constructed for this purpose, or it may comprise at least a general-purpose computer selectively activated or reconfigured by a computer program stored in the computer. The controller 64 may further be a dedicated controller, or may be a program stored on an engine or aircraft controller.

The controller 64 may include a computer program directing operation. Such a computer program and also data required for its execution may be stored in a computer readable storage medium, such as, but is not limited to, any type of disk including floppy disks, optical disks, CD-ROMs, magnetic-optical disks, read-only memories (ROMs), random access memories (RAMS), EPROMs, EEPROMs, magnetic or optical cards, application specific integrated circuits (ASICs), or any type of media suitable for storing electronic instructions, and each coupled to a computer system bus. Furthermore, the computer referred to may include a single processor or may be architectures employing multiple processor designs for increased computing capability.

Referring to Figure 1, with reference to Figure 2, in one operational embodiment, gas flow 40 through the evaporator system 42 generates steam flow 48 that is injected into the combustor 28. As heat in the gas flow 40 is used to generate steam, it cools and is communicated to the condenser 44. In the condenser 44, the gas flow is further cooled by rejecting heat to the cooling fuel flow 38 or the ram air flow 70. The gas flow 40 is cooled to the point where liquid water condenses, is separated in the water separator 46 and routed to the water tank 52. The remaining gas flow is exhausted to the ambient environment.

Water from the tank 52 is pressurized by the water pump 54 and communicated as the cooling flow 60 into the ACC system 58. The cooling water flow 60 accepts heat from the case structure 72 to control thermal expansion and thereby the clearance 78 between blade tips 76 and an inner surface 80 of the case structure 72. The amount of cooling water flow 60 is controlled by the controller 64 through operation of the control valve 62.

The exhausted heated water flow 94 from the cooling passage 90 is routed to the evaporator system 42 where additional heat is added to generate the steam flow 48. Accordingly, the thermal energy absorbed by the water is recovered by reducing the amount of additional heat required to generate the steam flow 48 in the evaporator system 42.

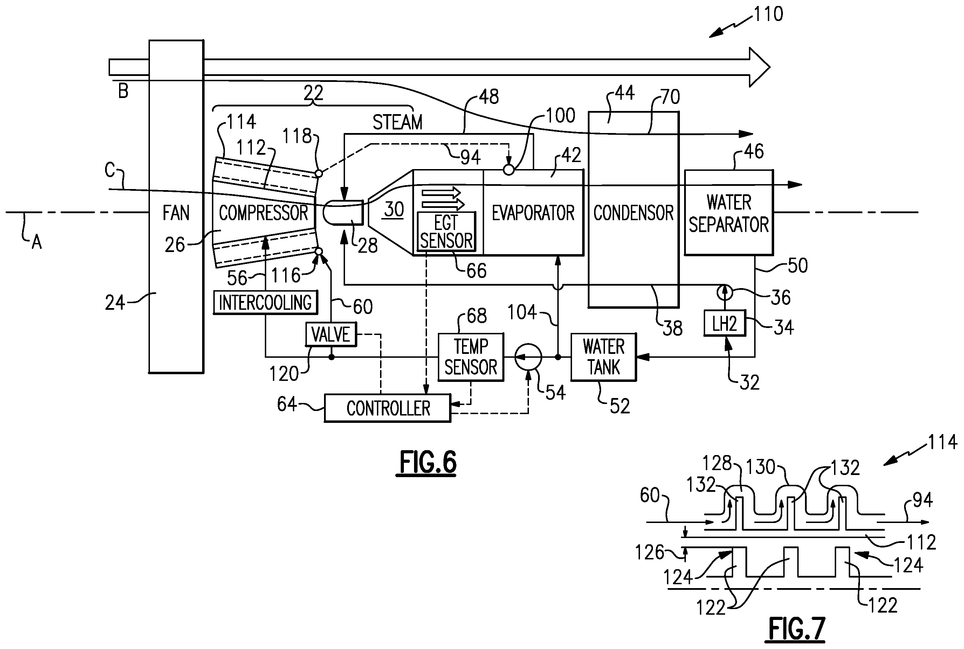

Referring to Figures 6 and 7 another example propulsion system 110 is schematically shown and includes an ACC system 114 for controlling clearances between tips 124 of rotating blades 122 in the compressor section 26 and an inner surface of a compressor case 112. A control valve 120 controls the cooling water flow 60 to the ACC system 114. The example ACC system 114 operates by controlling thermal expansion of the compressor case structure 112 and thereby the clearance 126 between tips 124 of rotating compressor blades 122 (Figure 7). The cooling water flow 60 flows through a cooling passage 128 defined about the compressor case structure 112. The cooling passage 128 includes an inlet 116 that receives the cooling water flow 60 and an outlet 118 through which a heated water flow 94 is exhausted. In one example embodiment, the cooling passage is defined between an outer wall 130 and the compressor case structure 112. Rib members 132 may be located to correspond with the rotating compressor blades 122 to locally improve thermal communication.

The cooling water flow 60 accepts heat from the compressor case structure 112 and leaves the cooling passage 128 as a heated water flow 94. The heated water flow 94 is communicated to the inlet of the evaporator system 42 for transformation into the steam flow 48. The heated water flow 94 is mixed with a water flow 94 and vaporized utilizing heat from the exhaust gas flow 40. The heated water flow 94 reduces the amount of heat required to generate the steam flow 48 and thereby recovers heat energy that may otherwise go unused. Accordingly, the ACC system 114 operates to improve compressor efficiency by maintaining clearances within predefined tolerances and recovers heat energy that may otherwise go unused.

Accordingly, the example ACC systems 58, 114 utilize cooling water flow to control tip to case clearances and uses thermal energy recovered from cooling the case structure to aid in the generation of steam flow in the evaporator to further improve engine efficiency.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An aircraft propulsion system (20;110) comprising:
a core engine (22) configured to generate an exhaust gas flow (40), the core engine including a compressor section (26), combustor section (28) and a turbine section (30), wherein the turbine section (30) includes a turbine case structure (72;112) and a rotatable turbine blade (74;122);
a condenser (44) where water is extracted from the exhaust gas flow (40);
an active clearance control system (58;58A;58B) configured to utilize water (50) extracted from the exhaust gas flow (40) to control a clearance (78;126) between a tip (76;124) of the rotatable turbine blade (74;122) and the turbine case structure (72;112) by controlling thermal growth of the turbine case structure (72;112), wherein the active clearance control system (58;58A;58B) includes a cooling passage (90;102;128) where a cooling water flow (60) is placed in thermal communication with the turbine case structure (72;112); and
an evaporator system (42) where thermal energy from the exhaust gas flow (40) is utilized to transform water (50) extracted from the exhaust gas flow (40) into a steam flow (48), wherein a portion of water (94) utilized in the active clearance control system (58;58A;58B) is communicated to the evaporator system (42).

2. The aircraft propulsion system (20;110) as recited in claim 1, wherein the turbine case structure (72;112) includes an inner wall (86) spaced radially apart from an outer wall (88) and the cooling passage (90) is at least partially defined within a radial space between the inner wall (86) and the outer wall (88).

3. The aircraft propulsion system (20;110) as recited in claim 1 or 2, wherein the cooling passage (102) comprises at least one conduit (102) disposed about an outer periphery (108) of the turbine case structure (72).

4. The aircraft propulsion system (20;110) as recited in claim 1, 2 or 3, further including a control valve (62;120) configured to proportionally control a flow rate of the cooling water flow (60) through the cooling passage (90;102;128).

5. The aircraft propulsion system (20;110) as recited in claim 4, further including a controller (64) programmed to operate the control valve (62;120) to adjust the flow rate of the cooling water flow (60) based on at least one of a measured engine temperature or a current engine operating condition.
